# EUROPÄISCHE PATENTSCHRIFT

(11) **EP 2 378 091 B1**
(45) Veröffentlichungstag und Bekanntmachung des Hinweises auf die Patenterteilung: **12.06.2013**
(21) Anmeldenummer: 11156840.8
(22) Anmeldetag: 03.03.2011
(51) Int. Cl.: F01N 3/021, F01N 3/28, F01N 13/14

(54) **Abgasbehandlungseinrichtung**
EXHAUST-GAS TREATMENT DEVICE
DISPOSITIF DE TRAITEMENT DE GAZ D'ÉCHAPPEMENT

(30) Priorität: 15.04.2010 DE 102010015273
(43) Veröffentlichungstag der Anmeldung: 19.10.2011
(73) Patentinhaber: Eberspächer Exhaust Technology GmbH & Co. KG, 66539 Neunkirchen (DE)
(72) Erfinder: Müller, Manfred, 73666 Baltmannsweiler (DE); Schwarz, Roland, 73732 Esslingen (DE)
(74) Vertreter: BRP Renaud & Partner

(56) Entgegenhaltungen:
- EP-A1- 0 112 634
- EP-A1- 0 176 722
- EP-A1- 0 471 175
- EP-A1- 1 149 992
- DE-A1- 2 407 263

## Beschreibung

Die vorliegende Erfindung betrifft eine Abgasbehandlungseinrichtung für eine Abgasanlage einer Brennkraftmaschine, insbesondere eines Kraftfahrzeugs.

Bei einer derartigen Abgasbehandlungseinrichtung kann es sich beispielsweise um einen Katalysator oder um ein Partikelfilter oder um eine beliebige Kombination daraus handeln. Üblicherweise umfasst eine derartige Abgasbehandlungseinrichtung ein Gehäuse sowie zumindest ein Abgasbehandlungselement, bei dem es sich zum Beispiel um ein Partikelfilterelement oder um ein Katalysatorelement handeln kann.

Das Gehäuse kann bei üblicher Bauart einen Mantel sowie einen Auslasstrichter aufweisen. Zusätzlich kann auch ein Einlasstrichter vorhanden sein. Das jeweilige Abgasbehandlungselement ist üblicherweise in der Umfangsrichtung von einer Lagermatte umhüllt und im Mantel angeordnet. Ferner ist das jeweilige Abgasbehandlungselement zweckmäßig über einen Stützring axial am Gehäuse abgestützt.

Zur thermischen Isolation kann der Auslasstrichter mit einer sogenannten Luftspaltisolation arbeiten. Hierzu kann er einen Außentrichter und einen Innentrichter aufweisen, zwischen denen ein Isolationsraum ausgebildet ist, der den Innentrichter in Umfangsrichtung umhüllt.

Eine gattungsgemäße Abgasbehandlungseinrichtung ist aus der EP 0 176 722 A1 bekannt. Darin weist die Abgasbehandlungseinrichtung einen Außentrichter auf, der einstückig mit einem Mantel eines Gehäuses der Abgasbehandlungsvorrichtung ausgebildet ist. Der Außentrichter umfasst dabei einen Auslasstrichter und einen Innentrichter, wobei am Auslasstrichter ein Ringflansch angeordnet ist, der den Innentrichter am Außentrichter einklemmt.

Aus der EP 0 112 634 A1 ist eine weitere Abgasbehandlungseinrichtung bekannt, die einen Innentrichter und einen Außentrichter aufweist, welche an den einander zugewandten Endbereichen voneinander beabstandet angeordnet sind.

In der EP 0 471 175 A1 ist eine Abgasbehandlungseinrichtung mit einem Gehäuse und einem Mantel beschrieben, die einen Auslasstrichter aufweist. Im Inneren des Mantels sind zudem nach innen gerichtete Stützelemente vorgesehen, die ein Abgasbehandlungselement der Abgasbehandlungseinrichtung im Gehäuse tragen.

Weiterer gattungsgemäße Abgasbehandlungseinrichtungen sind aus der EP 1 149 992 A1 und der DE 24 07 263 A1 bekannt.

Problematisch bei diesen Bauweisen sind regelmäßig thermisch bedingte Dehnungseffekte, die zu Relativbewegungen bzw. Spannungen zwischen den einzelnen Komponenten der Abgasbehandlungseinrichtung führen können. Beispielsweise ist der Innentrichter höheren Temperaturen ausgesetzt als der Außentrichter. Des Weiteren wärmt sich der Innentrichter beim Aufheizen der Abgasanlage schneller auf als der Außentrichter. Sofern im Isolationsraum ein Isolationsmaterial untergebracht ist, soll außerdem eine direkte Beaufschlagung des Isolationsraums mit Abgas vermieden werden, um eine Beschädigung des Isolationsmaterials und insbesondere ein Austrag des Isolationsmaterials zu vermeiden. Des Weiteren kann die Positionierung und Abstützung des Stützrings am Gehäuse beliebig aufwändig gestaltet werden.

Die vorliegende Erfindung beschäftigt sich mit dem Problem, für eine Abgasbehandlungseinrichtung der gattungsgemäßen Art eine verbesserte Ausführungsform anzugeben, die sich insbesondere durch eine verbesserte Dauerhaltbarkeit auszeichnet. Ferner soll eine einfache Herstellbarkeit realisiert werden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, Außentrichter und Innentrichter so aufeinander abzustimmen, dass ein dem Mantel zugewandtes inneres Ende des Innentrichters außen am Außentrichter anliegt und innen den Stützring trägt, während der Außentrichter mit dem Mantel fest verbunden ist. Die vom jeweiligen Abgasbehandlungselement auf den Stützring übertragenen Axialkräfte werden vom Innentrichter direkt auf den Außentrichter übertragen, so dass die Axialkräfte letztlich vom Außentrichter aufgenommen werden. Hierdurch ist es beispielsweise möglich, den Innentrichter mit einer deutlich geringeren Wandstärke auszugestalten als den Außentrichter. Beispielsweise beträgt die Wandstärke des Innentrichters maximal 50% der Wandstärke des Außentrichters. Durch diese Bauweise wird gleichzeitig sichergestellt, dass der Isolationsraum an einer dem Abgasbehandlungselement zugewandten Anströmseite verschlossen ist, da dort die inneren Enden der beiden Trichter aneinander anliegen. Somit kann effektiv eine Beaufschlagung des Isolationsraums mit der Abgasströmung verhindert werden.

Entsprechend einer besonders vorteilhaften Ausführungsform kann der Innentrichter auslassseitig, also an einem vom Mantel abgewandten äußeren Ende relativ zum Außentrichter zumindest in der Strömungsrichtung lose angeordnet sein. Insbesondere kann der Innentrichter auslassseitig freistehend im Außentrichter angeordnet sein. Diese Bauweise ermöglicht Relativbewegungen zwischen Innentrichter und Außentrichter, ohne dass es dabei zu mechanischen Spannungen kommt. Während bei einer losen Anordnung grundsätzlich ein Körperkontakt zwischen Innentrichter und Außentrichter möglich ist, vermeidet eine freistehende Anordnung einen derartigen Kontakt, wodurch auch die Gefahr von Beschädigungen durch Abrieb reduziert ist.

Besonders vorteilhaft ist eine Ausgestaltungsform, bei der ein vom Mantel abgewandtes äußeres Ende des Innentrichters von einem vom Mantel abgewandten äußeren Ende des Außentrichters quer zur Strömungsrichtung beabstandet ist, und zwar insbesondere entlang des gesamten Umfangs. Hierdurch ist klar, dass die äußeren Enden der beiden Trichter nahe beieinander liegen, so dass sich der Innentrichter im Wesentlichen über die gesamte Innenkontur des Außentrichters erstreckt, nämlich von den inneren Enden der beiden Trichter bis zu den äußeren Enden der beiden Trichter. Auf diese Weise wird der Außentrichter zwischen seinen Enden durch den Isolationsraum thermisch isoliert.

Bei einer speziellen Ausführungsform kann in ein vom Mantel abgewandtes äußeres Ende des Außentrichters in eine Hülse eingesteckt und damit fest verbunden sein. Ein vom Mantel abgewandtes äußeres Ende des Innentrichters ist dann zweckmäßig von dieser Hülse quer zur Strömungsrichtung beabstandet, und zwar insbesondre entlang des gesamten Umfangs. Somit kann der Innentrichter auch relativ zur Hülse thermisch bedingte Bewegungen durchführen, ohne dass es zu mechanischen Spannungen kommt.

Besonders vorteilhaft ist eine Ausführungsform, bei welcher am inneren Ende des Innentrichters eine integrierte Halterung zum Abstützen des Stützrings ausgeformt ist. Hierdurch kann auf eine separate Halterung zum Positionieren bzw. Abstützen des Stützrings verzichtet werden. Diese Funktion wird in den Innentrichter integriert.

Zweckmäßig kann die Halterung einen Halteboden aufweisen, der in Umfangsrichtung umläuft und an dem der Stützring axial abgestützt ist. Zusätzlich oder alternativ kann die Halterung einen Haltekragen aufweisen, der in Umfangsrichtung umläuft und an dem der Stützring radial nach außen abgestützt ist. Zusätzlich oder alternativ kann die Halterung einen Haltebund aufweisen, der in der Umfangsrichtung umläuft und an dem der Stützring radial nach innen abgestützt ist. Zweckmäßig können Halteboden, Haltekragen und Haltebund integral am inneren Ende des Innentrichters ausgeformt sein.

Bei einer anderen Ausführungsform kann am inneren Ende des Außentrichters eine integrierte Aufnahme zum Halten des Innentrichters im Bereich des Stützrings bzw. der Halterung ausgeformt sein. Hierdurch kann beispielsweise auf eine separate Halterung zum Halten und Positionieren des Innentrichters verzichtet werden. Die integrierte Halterung ermöglicht insbesondere eine flächige Abstützung des Innentrichters, wodurch die Belastung des Innentrichters und des Außentrichters reduziert wird.

Die Aufnahme kann einen in Umfangsrichtung umlaufenden Aufnahmeboden aufweisen, an dem die Halterung, insbesondere an einem Halteboden, axial abgestützt ist. Zusätzlich oder alternativ kann die Aufnahme einen in Umfangsrichtung umlaufenden Aufnahmekragen aufweisen, an dem die Halterung, insbesondere an einem Haltekragen, radial nach außen abgestützt ist, und mit dem der Außentrichter dem Mantel fest verbunden ist. Über den Aufnahmeboden bzw. über den Aufnahmekragen kann eine flächige Abstützung des Innentrichters am Außentrichter in der Axialrichtung bzw. in der Radialrichtung realisiert werden, was die Belastung des Innentrichters und des Außentrichters reduziert. Insbesondere kann dadurch eine formschlüssige Positionierung des Innentrichters am Außentrichter realisiert werden, ohne dass eine Befestigung zwischen Innentrichter und Außentrichter erforderlich ist. So können Innentrichter und Außentrichter im Bereich der Aufnahme lose aneinander liegen oder lediglich radial verpresst sein, um eine gewünschte Lagefixierung zumindest für die Montage sicherzustellen. Insbesondere kann auf eine Lötverbindung oder Schweißverbindung zwischen Innentrichter und Außentrichter verzichtet werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

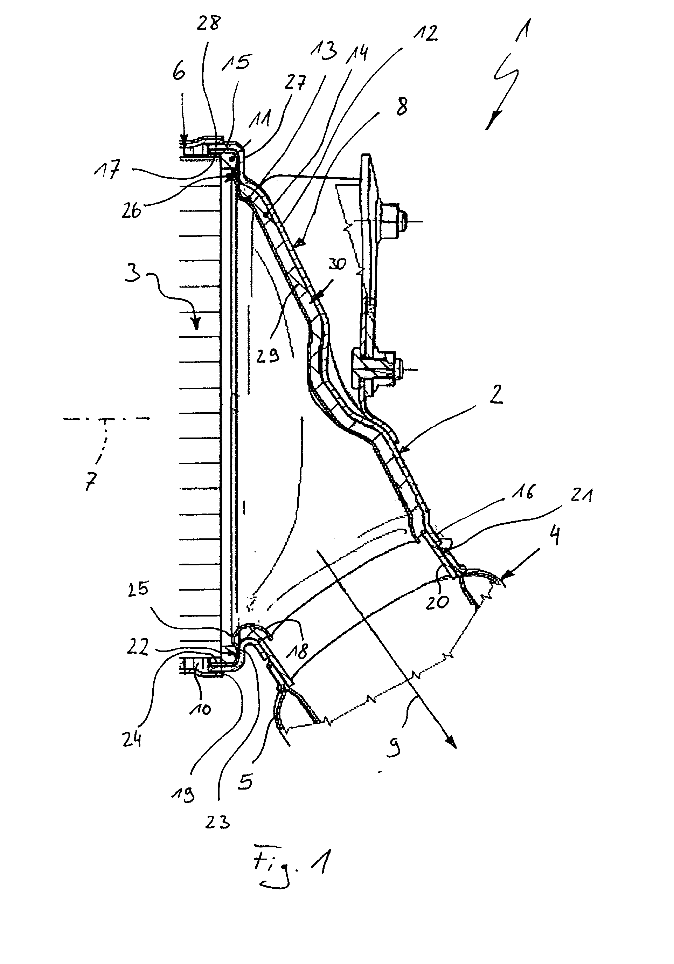

Die einzige Figur 1 zeigt einen leicht perspektivischen Längsschnitt einer Abgasbehandlungseinrichtung im Bereich eines Außentrichters.

Entsprechend Figur 1 umfasst eine nur teilweise dargestellte Abgasbehandlungseinrichtung 1 ein Gehäuse 2 und zumindest ein Abgasbehandlungselement 3. Die Abgasbehandlungseinrichtung 1 ist für eine Verwendung in einer Abgasanlage 4 vorgesehen, von der hier lediglich eine Komponente 5 erkennbar ist. Die Abgasanlage 4 dient zum Wegführen von Abgasen einer Brennkraftmaschine, die sich insbesondere in einem Kraftfahrzeug befinden kann. Bei der Abgasbehandlungseinrichtung 1 kann es sich beispielsweise um einen Katalysator oder um ein Partikelfilter oder um eine Kombination daraus handeln. Dementsprechend handelt es sich beim jeweiligen Abgasbehandlungselement 3 beispielsweise um ein Partikelfilterelement oder um ein Katalysatorelement.

Das Gehäuse 2 besitzt einen hier nur teilweise erkennbaren Mantel 6, dessen Längsmittelachse 7 die Längsmittelachse der Abgasbehandlungseinrichtung 1 bestimmt und gleichzeitig die Längsrichtung bzw. Axialrichtung des Gehäuses 2 bzw. der Abgasbehandlungseinrichtung 1 definiert. Die Längsrichtung bzw. Axialrichtung verläuft parallel zur Längsmittelachse 7. Außerdem besitzt das Gehäuse 2 einen Auslasstrichter 8, durch den das Abgas aus dem Gehäuse 2 austritt und beispielsweise in die weitere Komponente 5 der Abgasanlage 4 überströmt. Eine am Auslass des Auslasstrichters 8 vorherrschende Strömungsrichtung ist in Figur 1 durch einen Pfeil 9 symbolisiert. Darüber hinaus kann das Gehäuse 2 optional auch einen hier nicht gezeigten Einlasstrichter aufweisen.

Das Abgasbehandlungselement 3 ist im Gehäuse 2, und zwar im Mantel 6 angeordnet. Dabei ist das Abgasbehandlungselement 3 zweckmäßig von einer Lagermatte 10 in der Umfangsrichtung umhüllt. Die Umfangsrichtung bezieht sich dabei auf die Längsmittelachse 7. Die Lagermatte 10 kann beispielsweise aus einem entsprechenden Lagermaterial hergestellt sein. Das Lagermaterial der Lagermatte 11 kann gleichzeitig thermisch isolierend wirken und dementsprechend auch ein thermisch isolierendes Isolationsmaterial repräsentieren.

Des Weiteren ist das Abgasbehandlungselement 3 über einen Stützring 11 axial am Gehäuse 2 abgestützt. Der Stützring 11 kann beispielsweise aus einem Drahtgestrick hergestellt sein.

Der Auslasstrichter 8 besitzt einen Außentrichter 12 und einen Innentrichter 13, zwischen denen ein Isolationsraum 14 ausgebildet ist, der den Innentrichter 13 in der Umfangsrichtung umhüllt. Der Außentrichter 12 besitzt ein dem Mantel 6 zugewandtes inneres Ende 15 sowie ein vom Mantel 6 abgewandtes äußeres Ende 16. Auch der Innentrichter 13 besitzt ein dem Mantel 6 zugewandtes inneres Ende 17 sowie ein vom Mantel 6 abgewandtes äußere Ende 18.

Der Außenmantel 12 ist an seinem inneren Ende 15 fest mit dem Mantel 6 verbunden. Grundsätzlich ist dabei eine integrierte Bauform denkbar, bei welcher der Außentrichter 12 integral am Mantel 6 ausgeformt ist. Beispielsweise können Mantel 6 und Außentrichter 12 aus einem Blechteil durch Umformung hergestellt sein. Gezeigt ist in Figur 1 jedoch eine bevorzugte Ausführungsform, bei welcher Mantel 6 und Außentrichter 12 separate Bauteile sind, die aneinander befestigt sind. Im Beispiel ist der Außentrichter 12 in den Mantel 6 eingesteckt. Er kann mit dem Mantel 6 verlötet sein. Bevorzugt wird jedoch eine Schweißnaht 19, die insbesondere in der Umfangsrichtung geschlossen umläuft, um den Außentrichter 12 fest und gasdicht mit dem Mantel 6 zu verbinden.

Der Innentrichter 13 trägt an seinem inneren Ende 17 den Stützring 11 und liegt mit seinem inneren Ende 17 am inneren Ende 15 des Außentrichters 12 an. Im gezeigten Beispiel liegt der Innentrichter 13 mit seinem inneren Ende 17 am inneren Ende 15 des Außentrichters 12 axial und radial an. Die radiale Richtung ist dabei auf die Längsmittelachse 7 bezogen.

Insbesondere kann vorgesehen sein, dass der Innentrichter 3 wie bei der hier gezeigten Ausführungsform ausschließlich im Bereich seines inneren Endes 17 am Außentrichter 12 anliegt. Zwischen den inneren Enden 15, 17 und den äußeren 16,18 der beiden Trichter 12, 13 ist der Isolationsraum 14 ausgestaltet, der sich in der Umfangsrichtung geschlossen erstreckt, so dass vorzugsweise im Bereich des Isolationsraums 14 kein Kontakt zwischen Innentrichter 13 und Außentrichter 12 vorliegt. Des Weiteren ist der Innentrichter 13 im Außentrichter 12 zweckmäßig so angeordnet, dass er auslassseitig, also im Bereich seines äußeren Endes 18 freistehend im Außentrichter 12 angeordnet ist. Dabei kann sich der Innentrichter 13 mit seinem äußeren Ende 18 bis zum äußeren Ende 16 des Außentrichters 12 erstrecken. In diesem Fall ist das äußere Ende 18 des Innentrichters 13 quer zur Strömungsrichtung 9 vom äußeren Ende 16 des Außentrichters 12 beabstandet angeordnet. Bevorzugt ist dabei eine Ausführungsform, bei der diese Beabstandung quer zur Strömungsrichtung 9 zwischen den beiden äußeren Enden 16, 18 entlang des gesamten Umfangs vorliegt.

Grundsätzlich sind jedoch auch andere Anordnungen denkbar, bei denen der Innentrichter 13 im Bereich seines äußeren Endes 18 relativ zum Außentrichter 12 lose angeordnet ist. Eine lose Anordnung ist beispielsweise auch dann realisiert, wenn der Innentrichter 13 den Außentrichter 12 berührt, jedoch daran entlang verschiebbar ist.

Im gezeigten Beispiel ist in das äußere Ende 16 des Außentrichters 12 eine Hülse 20 eingesteckt. Die Hülse 20 kann beispielsweise mittels einer umlaufenden Schweißnaht 21 fest mit dem Außentrichter 12 verbunden sein. Besagte Schweißnaht 21 verbindet dann zweckmäßig das äußere Ende 16 des Außentrichters 12 stirnseitig mit der Außenseite der Hülse 20. Die Beabstandung zwischen den äußeren Enden 16, 18 der beiden Trichter 12, 13 quer zur Strömungsrichtung 9 ist zweckmäßig so abgestimmt, dass das äußere Ende 18 des Innentrichters 13 auch von der Hülse 20 quer zur Strömungsrichtung 9 beabstandet ist, und zwar vorzugsweise ebenfalls entlang des gesamten Umfangs. Somit ist der Innentrichter 13 auch bezüglich der Hülse 20 an seinem äußeren Ende 18 freistehend angeordnet.

Am inneren Ende 17 des Innentrichters 13 kann eine Halterung 22 integral ausgeformt sein, mit deren Hilfe der Stützring 11 am Innentrichter 13 abgestützt ist. Auf eine separate Halterung kann dadurch verzichtet werden. Die Halterung 22 kann einen Halteboden 23 aufweisen, der in der Umfangsrichtung umläuft und an dem der Stützring 11 in der Axialrichtung abgestützt ist. Im Beispiel weist die Halterung 22 außerdem einen Haltekragen 24 auf, der ebenfalls in der Umfangsrichtung umläuft und an dem der Stützring 11 radial nach außen abgestützt ist. Zweckmäßig ist der Haltekragen 24 radial außen am Halteboden 23 ausgeformt. Bei der hier gezeigten Ausführungsform ist die Halterung 22 außerdem mit einem Haltebund 25 versehen, der sich ebenfalls in der Umfangsrichtung erstreckt und an dem der Stützring 11 radial nach innen abgestützt ist. Der Haltebund 25 ist in der Axialrichtung kleiner als der Haltekragen 24. Ferner ist der Haltebund 25 hier am Halteboden 23 radial innen ausgeformt. Die axiale Erstreckung des Haltebunds 25 vom Halteboden 23 ist kleiner als die axiale Erstreckung des Stützrings 11 vom Halteboden 23. Im Unterschied dazu ist die axiale Erstreckung des Haltekragens 24 vom Halteboden 23 größer als die axiale Erstreckung des Stützrings 11 vom Halteboden 23.

Bei der gezeigten Integralbauweise geht der Innentrichter 13 im Bereich seines inneren Endes 17 zunächst in den Haltebund 25, anschließend in den Halteboden 23 und schließlich in den Haltekragen 24 über.

Zur Realisierung einer besonders intensiven Abstützung des Innentrichters 13 am Außentrichter 12 im Bereich des Stützrings 11 kann am inneren Ende 15 des Außentrichters 12 eine Aufnahme 26 integral am Außentrichter 12 ausgeformt sein. Die Aufnahme 26 dient somit zur Unterstützung bzw. zum Halten des Innentrichters 13 im Bereich der Halterung 22 bzw. im Bereich des Stützrings 11. Beispielsweise kann die Aufnahme 26 hierzu einen Aufnahmeboden 27 aufweisen, der in der Umfangsrichtung umläuft und an dem die Halterung 22 axial abgestützt ist. Insbesondere stützt sich der Halteboden 23 axial am Aufnahmeboden 27 ab. Zusätzlich kann die Aufnahme 26 einen Aufnahmekragen 28 aufweisen, der in der Umfangsrichtung umläuft und an dem die Halterung 22 radial nach außen abgestützt ist. Insbesondere kann der Haltekragen 24 am Aufnahmekragen 28 radial nach außen abgestützt sein. Der Außentrichter 12 ist im Beispiel über diesen Aufnahmekragen 28 am Mantel 6 befestigt. Besagter Aufnahmekragen 28 ist hier außerdem radial außen am Aufnahmeboden 27 ausgeformt. Die Abmessungen und die Formgebung der Aufnahme 26 sind auf die Abmessungen und die Formgebung des inneren Endes 17 des Innentrichters 13 zweckmäßig so abgestimmt, dass sich sowohl in der Axialrichtung als auch in der Radialrichtung eine flächige Kontaktierung zwischen Innentrichter 13 und Außentrichter 12 ergibt. Dabei kann insbesondere vorgesehen sein, dass der Innentrichter 13 im Bereich seines inneren Endes 17 lose am Außentrichter 12 anliegt. Diese lose Anlage kann dabei unabhängig von der Realisierung der Aufnahme 26 vorgesehen sein. Insbesondere lässt sich eine derartige lose Kontaktierung bzw. lose Anlage zwischen Innentrichter 13 und Außentrichter 12 auch ohne eine derartige Aufnahme 26 realisieren. Durch die lose Anlage zwischen Innentrichter 13 und Außentrichter 12 sind grundsätzlich Relativbewegungen zwischen Innentrichter 13 und Außentrichter 12 möglich.

Zur Realisierung einer Lagefixierung zwischen Innentrichter 13 und Außentrichter 12 kann eine axiale Klemmung des Innentrichters 13 zwischen dem Außentrichter 12 und dem Stützring 11 realisiert werden. Hierbei wird der Innentrichter 13 nur im Bereich seines inneren Endes 17 axial zwischen dem Stützring 11 und dem Außentrichter 12 geklemmt. Optional kann außerdem vorgesehen sein, die radialen Abmessungen der inneren Enden 15, 17 der beiden Trichter 12, 13 so aufeinander abzustimmen, dass der Innentrichter 13 mit einem Presssitz im Außentrichter 12 sitzt und dadurch ebenfalls lagefixiert ist. Eine derartige radiale Verpressung lässt sich insbesondere in Verbindung mit der Aufnahme 26 realisieren.

Bei einer derartigen Bauform kann insbesondere auf eine Fixierung, beispielsweise mittels einer Lötverbindung oder einer Schweißverbindung, zwischen Innentrichter 13 und Außentrichter 12 verzichtet werden, was die Montage erheblich vereinfacht. Insbesondere kann vorgesehen sein, den Auslasstrichter 8 ausschließlich über den Außentrichter 12 am Mantel 6 zu befestigen. Wie im gezeigten Beispiel ist dann keine direkte Verbindung zwischen Innentrichter 13 und Mantel 6 vorhanden.

Im Isolationsraum 14 kann ein thermisch isolierendes Isolationsmaterial 29 angeordnet sein. Ebenso ist es möglich, im Isolationsraum 14 einen Isolationskörper 30 anzuordnen, der aus einem thermisch isolierenden Material 29 besteht. Der Isolationskörper 30 ist vorgeformt bzw. ist ein Formkörper, dessen Innenkontur an die Außenkontur des Innentrichters 13 angepasst ist und dessen Außenkontur an die Innenkontur des Außentrichters 12 angepasst ist.

Das Isolationsmaterial 29 bzw. der Isolationskörper 30 ist vor einer direkten Beaufschlagung mit heißem Abgas geschützt, da die Anströmseite des Isolationsraums 14 dadurch verschlossen ist, dass die inneren Enden 15, 17 der beiden Trichter 12, 13 aneinander anliegen.

Das Abgasbehandlungselement 3 kann als Monolith ausgestaltet sein. Das Abgasbehandlungselement 3 kann ein Metallkörper sein oder ein Keramikkörper.

Bevorzugt handelt es sich bei Abgasbehandlungselement 3 um einen keramischen Monolithen.

## Patentansprüche

1. Abgasbehandlungseinrichtung (1) für eine Abgasanlage (4) einer Brennkraftmaschine, insbesondere eines Kraftfahrzeugs,
- mit einem Gehäuse (2), das einen Mantel (6) und einen Auslasstrichter (8) aufweist,
- mit mindestens einem Abgasbehandlungselement (3), das im Mantel (6) angeordnet ist und über einen Stützring (11) axial am Gehäuse (2) abgestützt ist,
**dadurch gekennzeichnet,**
- **dass** der Auslasstrichter (8) einen fest mit dem Mantel (6) verbundenen Außentrichter (12) und einen Innentrichter (13) aufweist, der an einem dem Mantel (6) zugewandten inneren Ende (17) den Stützring (11) trägt,
- **dass** zwischen Innentrichter (13) und Außentrichter (12) ein Isolationsraum (14) ausgebildet ist, der den Innentrichter (13) in Umfangsrichtung umhüllt,
- **dass** das innere Ende (17) des Innentrichters (13) an einem dem Mantel (6) zugewandten inneren Ende (15) des Außentrichters (12) anliegt.

2. Abgasbehandlungseinrichtung nach Anspruch 1,
**dadurch gekennzeichnet,**
**dass** der Innentrichter (13) im Bereich seines vom Mantel (6) abgewandten äußeren Endes (18) relativ zum Außentrichter (12) zumindest in der Strömungsrichtung (9) lose angeordnet ist, wobei insbesondere vorgesehen sein kann, dass der Innentrichter (13) auslassseitig freistehend im Außentrichter (12) angeordnet ist.

3. Abgasbehandlungseinrichtung nach Anspruch 1 oder 2,
**dadurch gekennzeichnet,**
**dass** ein vom Mantel (6) abgewandtes äußeres Ende (18) des Innentrichters (13) von einem vom Mantel (6) abgewandten äußeren Ende (16) des Außentrichters (12) quer zur Strömungsrichtung (9) beabstandet ist, und zwar insbesondere entlang des gesamten Umfangs.

4. Abgasbehandlungseinrichtung nach einem der Ansprüche 1 bis 3,
**dadurch gekennzeichnet,**
- **dass** in ein vom Mantel (6) abgewandtes äußeres Ende (16) des Außentrichters (12) in eine Hülse (20) eingesteckt ist,
- **dass** ein vom Mantel (6) abgewandtes äußeres Ende (18) des Innentrichters (13) von der Hülse (20) quer zur Strömungsrichtung (9) beabstandet ist, und zwar insbesondere entlang des gesamten Umfangs.

5. Abgasbehandlungseinrichtung nach einem der Ansprüche 1 bis 4,
**dadurch gekennzeichnet,**
**dass** am inneren Ende (17) des Innentrichters (13) eine integrierte Halterung (22) zum Abstützen des Stützrings (11) ausgeformt ist.

6. Abgasbehandlungseinrichtung nach Anspruch 5,
**dadurch gekennzeichnet,**
- **dass** die Halterung (22) einen in Umfangsrichtung umlaufenden Halteboden (23) aufweist, an dem der Stützring (11) axial abgestützt ist, und/oder
- **dass** die Halterung (22) einen in Umfangsrichtung umlaufenden Haltekragen (24) aufweist, an dem der Stützring (11) radial nach außen abgestützt ist, und/oder
- **dass** die Halterung (22) einen in Umfangsrichtung umlaufenden Haltebund (25) aufweist, an dem der Stützring (11) radial nach innen abgestützt ist,
- wobei insbesondere vorgesehen sein kann, dass der Haltekragen (24) radial außen am Halteboden (23) ausgeformt ist, und/oder
- wobei insbesondere vorgesehen sein kann, dass der Haltebund (25) radial innen am Halteboden (23) ausgeformt ist.

7. Abgasbehandlungseinrichtung nach einem der Ansprüche 1 bis 6,
**dadurch gekennzeichnet,**
**dass** am inneren Ende (15) des Außentrichters (12) eine integrierte Aufnahme (26) zum Halten des Innentrichters (13) im Bereich des Stützrings (11) ausgeformt ist.

8. Abgasbehandlungseinrichtung nach einem der Ansprüche 5 bis 7,
**dadurch gekennzeichnet,**
- **dass** die Aufnahme (26) einen in Umfangsrichtung umlaufenden Aufnahmeboden (27) aufweist, an dem die Halterung (22), insbesondere an einem Halteboden (23), axial abgestützt ist, und/oder
- **dass** die Aufnahme (26) einen in Umfangsrichtung umlaufenden Aufnahmekragen (28) aufweist, an dem die Halterung (22), insbesondere an einem Haltekragen (24), radial nach außen abgestützt ist und mit dem der Außentrichter (12) mit dem Mantel (6) verbunden ist,
- wobei insbesondere vorgesehen sein kann, dass der Aufnahmekragen (28) radial außen am Aufnahmeboden (27) ausgeformt ist.

9. Abgasbehandlungseinrichtung nach einem der Ansprüche 1 bis 8,
**dadurch gekennzeichnet,**
**dass** der Innentrichter (13) nur im Bereich seines inneren Endes (17) am Außentrichter (12) anliegt.

10. Abgasbehandlungseinrichtung nach einem der Ansprüche 1 bis 9, **dadurch gekennzeichnet,**
- **dass** der Innentrichter (13) im Bereich seines inneren Endes (17) lose am Außentrichter (12) anliegt, und/oder
- **dass** der Innentrichter (13) am Außentrichter (12) dadurch lagefixiert ist, dass der Innentrichter (13) an seinem inneren Ende (17) axial zwischen dem Stützring (11) und dem Außentrichter (12) geklemmt ist.

11. Abgasbehandlungseinrichtung nach einem der Ansprüche 1 bis 10, **dadurch gekennzeichnet,**
- **dass** im Isolationsraum (14) ein thermisch isolierendes Isolationsmaterial (29) angeordnet ist, und/oder
- **dass** im Isolationsraum (14) ein Isolationskörper (30) aus einem thermisch isolierenden Isolationsmaterial (29) angeordnet ist.

## Claims

1. An exhaust gas treatment device (1) for an exhaust system (4) of an internal combustion engine, in particular of a motor vehicle,
- with a housing (2), which comprises a jacket (6) and an outlet funnel (8),
- with at least one exhaust gas treatment element (3), which is arranged in the jacket (6) and axially supported on the housing (2) via a support ring (11),
**characterized**
- **in that** the outlet funnel (8) comprises an outer funnel (12) that is connected to the jacket (6) in a fixed manner and an inner funnel (13), which on an inner end (17) facing the jacket (6) carries the support ring (11),
- **in that** between inner funnel (13) and outer funnel (12) an insulation space (14) is formed, which envelopes the inner funnel (13) in circumferential direction,
- **in that** the inner end (17) of the inner funnel (13) abuts an inner end (15) of the outer funnel (12) facing the jacket (6).

2. The exhaust gas treatment device according to Claim 1, **characterized in that** the inner funnel (13) is loosely arranged at least in the flow direction (9) in the region of its outer end (18) facing away from the jacket (6) relative to the outer funnel (12), wherein it can be provided in particular that the inner funnel (13) is arranged freely standing in the outer funnel (12) on the outlet side.

3. The exhaust gas treatment device according to Claim 1 or 2, **characterized in that** an outer end (18) of the inner funnel (13) facing away from the jacket (6) is spaced from an outer end (16) of the outer funnel (12) facing away from the jacket (6) transversely to the flow direction (9), namely in particular along the entire circumference.

4. The exhaust gas treatment device according to any one of the Claims 1 to 3, **characterized**
- **in that** in an outer end (16) of the outer funnel (12) facing away from the jacket (6) a sleeve (20) is inserted,
- **in that** an outer end (18) of the inner funnel (13) facing away from the jacket (6) is spaced from the sleeve (20) transversely to the flow direction (9) namely in particular along the entire circumference.

5. The exhaust gas treatment device according to any one of the Claims 1 to 4, **characterized in that** on the inner end (17) of the inner funnel (13) an integrated holder (22) for supporting the support ring (11) is formed.

6. The exhaust gas treatment device according to Claim 5, **characterized**
- **in that** the holder (22) comprises a holding bottom (23) running around in circumferential direction, on which the support ring (11) is axially supported, and/or
- **in that** the holder (22) comprises a holding collar (24) running around circumferential direction, on which the support ring (11) is radially supported to the outside, and/or
- **in that** the holder (22) comprises a holding cuff (25) running around in circumferential direction, on which the support ring (11) is supported radially to the inside,
- wherein it can be provided in particular that the holding collar (24) is formed radially on the outside of the holding bottom (23), and/or
- wherein it can be provided in particular that the holding cuff (25) is formed radially inside on the holding bottom (23).

7. The exhaust gas treatment device according to any one of the Claims 1 to 6, **characterized in that** on the inner end (15) of the outer funnel (12) an integrated mounting (26) for holding the inner funnel (13) in the region of the support ring (11) is formed.

8. The exhaust gas treatment device according to any one of the Claims 5 to 7, **characterized**
- **in that** the mounting (26) comprises a mounting bottom (27) running around circumferential direction, on which the holder (22), in particular on a holding bottom (23), is axially supported, and/or
- **in that** the mounting (26) comprises a mounting collar (28) running around circumferential direction, on which the holder (22), in particular on a holding collar (24), is radially supported to the outside and with which the outer funnel (12) is connected to the jacket (6),
- wherein it can be provided in particular that the mounting collar (28) is formed on the mounting bottom (27) radially on the outside.

9. The exhaust gas treatment device according to any one of the Claims 1 to 8, **characterized in that** the inner funnel (13) abuts the outer funnel (12) only in the region of its inner end (17).

10. The exhaust gas treatment device according to any one of the Claims 1 to 9, **characterized**
- **in that** the inner funnel (13) in the region of its inner end (17) loosely abuts the outer funnel (12), and/or
- **in that** the inner funnel (13) is fixed in position on the outer funnel (12) in that the inner funnel (13) on its inner end (17) is axially clamped between the support ring (11) and the outer funnel (12).

11. The exhaust gas treatment device according to any one of the Claims 1 to 10, **characterized**
- **in that** in the insulation space (14) a thermally insulating insulation material (29) is arranged, and/or
- **in that** in the insulation space (14) an insulation body (30) of a thermally insulating insulation material (29) is arranged.

## Revendications

1. Dispositif de traitement des gaz d'échappement (1) pour une installation de gaz d'échappement (4) d'un moteur à combustion interne, notamment d'un véhicule automobile,
- comportant un logement (2), qui présente une gaine (6) et un entonnoir d'échappement (8),
- comportant au moins un élément de traitement de gaz d'échappement (3), qui est disposé dans la gaine (6) et est appuyé par l'intermédiaire d'une bague d'appui (11) axialement sur le logement (2),
**caractérisé en ce que**
- l'entonnoir d'échappement (8) présente un entonnoir extérieur (12) solidement relié à la gaine (6) et un entonnoir intérieur (13), qui supporte la bague d'appui (11) sur une extrémité intérieure (17) tournée vers la gaine (6),
- entre l'entonnoir intérieur (13) et l'entonnoir extérieur (12) un espace d'isolation (14) est réalisé, qui enveloppe l'entonnoir intérieur (13) dans la direction circonférentielle ;
- l'extrémité intérieure (17) de l'entonnoir intérieur (13) vient reposer sur une extrémité intérieure (15) tournée vers la gaine (6) de l'entonnoir extérieur (12).

2. Dispositif de traitement de gaz d'échappement selon la revendication 1, **caractérisé en ce que** l'entonnoir intérieur (13) est disposé de manière lâche au niveau de son extrémité extérieure (18) qui se détourne de la gaine (6) par rapport à l'entonnoir extérieur (12) au moins dans la direction d'écoulement (9), dans lequel il peut notamment être prévu que l'entonnoir intérieur (13) soit disposé isolément dans l'entonnoir extérieur (12) du côté d'échappement.

3. Dispositif de traitement de gaz d'échappement selon les revendications 1 ou 2, **caractérisé en ce que** une extrémité extérieure (18) qui se détourne de la gaine (6) de l'entonnoir intérieur (13) est espacée d'une extrémité extérieure (16) sui se détourne de la gaine (6) de l'entonnoir extérieur (12) transversalement à la direction d'écoulement (9), et notamment le long de la superficie totale.

4. Dispositif de traitement de gaz d'échappement selon une des revendications 1 à 3, **caractérisé en ce que**
- un fourreau (20) est enfiché dans l'extrémité extérieure (16) qui se détourne de la gaine (6) de l'entonnoir extérieure (12),
- une extrémité extérieure (18) qui se détourne de la gaine (6) de l'entonnoir intérieur (13) est espacée du fourreau (20) transversalement à la direction d'écoulement (9) et notamment le long de la superficie totale.

5. Dispositif de traitement de gaz d'échappement selon une des revendications 1 à 4, **caractérisé en ce que** un support intégré (22) afin d'étager la bague d'appui (11) est façonné sur l'extrémité intérieure (17) de l'entonnoir intérieur (13).

6. Dispositif de traitement de gaz d'échappement selon la revendication 5, **caractérisé en ce que**
- le support (22) présente une base de retenue (23) périphérique dans la direction circonférentielle, sur laquelle la bague d'appui (11) est appuyée axialement, et/ou
- le support (22) présente un collier de retenue (24) périphérique dans la direction circonférentielle, sur lequel la bague d'appui (11) est appuyée radialement vers l'extérieur, et/ou
- le support (22) présente un collet de retenue (25) périphérique dans la direction circonférentielle, sur lequel la bague d'appui (11) est appuyée radialement vers l'intérieur,
- dans lequel il peut notamment être prévu que le collier de retenue (24) est façonné radialement à l'extérieur sur la base de retenue (23), et/ou
- dans lequel il peut notamment être prévu que le collet de retenue (25) est façonné radialement à l'intérieur sur la base de retenue (23).

7. Dispositif de traitement de gaz d'échappement selon une des revendications 1 à 6, **caractérisé en ce que** sur l'extrémité intérieure (15) de l'entonnoir extérieur (12) un réceptacle intégré (26) pour retenir l'entonnoir intérieur (13) au niveau de la bague d'appui (11) est façonné.

8. Dispositif de traitement de gaz d'échappement selon une des revendications 5 à 7, **caractérisé en ce que**
- le réceptacle (26) présente une base de réceptacle (27) périphérique dans la direction circonférentielle, sur laquelle le support (22) est appuyé axialement, notamment sur une base de retenue (23), et/ou
- le réceptacle (26) présente un collier de retenue (28) périphérique dans la direction circonférentielle, sur lequel le support (22), est appuyé radialement vers l'extérieur, notamment sur un collet de retenue (24) et avec lequel l'entonnoir extérieur (12) est relié à la gaine (6),
- dans lequel il peut notamment être prévu que le collet de réceptacle (28) est façonné radialement à l'extérieur sur la base de réceptacle (27).

9. Dispositif de traitement de gaz d'échappement selon une des revendications 1 à 8, **caractérisé en ce que** l'entonnoir intérieur (13) vient reposer seulement au niveau de son extrémité intérieure (17) sur l'entonnoir extérieur (12).

10. Dispositif de traitement de gaz d'échappement selon une des revendications 1 à 9, **caractérisé en ce que**
- l'entonnoir intérieur (13) vient reposer au niveau de son extrémité intérieure (17) de manière lâche sur l'entonnoir extérieur (12), et/ou
- l'entonnoir intérieur (13) est fixé en position sur l'entonnoir extérieur (12), de telle sorte que l'entonnoir intérieur (13) soit pincé axialement sur son extrémité intérieure (17) entre la bague d'appui (11) et l'entonnoir extérieur (12).

11. Dispositif de traitement de gaz d'échappement selon une des revendications 1 à 10, **caractérisé en ce que**
- un matériau d'isolation (29) thermiquement isolant est disposé dans l'espace d'isolation (14), et/ou
- un corps d'isolation (30) constitué d'un matériau d'isolation (29) thermiquement isolant est disposé dans l'espace d'isolation (14).
